# EUROPÄISCHE PATENTSCHRIFT

(11) **EP 1 298 075 B1**
(45) Veröffentlichungstag und Bekanntmachung des Hinweises auf die Patenterteilung: **11.07.2012**
(21) Anmeldenummer: 01123553.8
(22) Anmeldetag: 01.10.2001
(51) Int. Cl.: B65D 88/16, B29C 65/16

(54) **Verfahren zum Herstellen eines flexiblen Schüttgutbehälters und danach hergestellte Schüttgutbehälter**
Method of producing a flexible intermediate bulk container and containers produced thereby
Procédé de fabrication d'un conteneur intermédiaire souple pour marchandises en vrac et conteneurs ainsi obtenus

(43) Veröffentlichungstag der Anmeldung: 02.04.2003
(73) Patentinhaber: EUREA VERPACKUNGS GMBH & CO. KG., D-48432 Rheine (DE); Institut für angewandte Biotechnik und Systemanalyse an der Universität Witten/Herdecke GmbH, 58455 Witten (DE)
(72) Erfinder: Hartmann, Siegfried Dipl.-Ing., 49477 Ibbenbüren (DE); Wurr, Egon Dipl.-Ing., 48432 Rheine (DE); Wolff, E.K. Dr., 58313 Herdecke (DE); Glotzbade, U. Dipl.-Ing., 58454 Witten (DE)
(74) Vertreter: Tarvenkorn, Oliver

(56) Entgegenhaltungen:
- EP-A- 0 180 379
- WO-A-97/47796
- FR-A- 2 634 468
- US-A- 4 473 432
- US-A- 4 597 102
- US-A- 5 873 498

## Beschreibung

Die Erfindung betrifft ein Verfahren zum Herstellen eines flexiblen Schüttgutbehälters.

Außerdem betrifft die Erfindung einen flexiblen Schüttgutbehälter, der international auch als Flexible Intermediate Bulk Container (FIBC) bezeichnet wird, mit den Merkmalen des Oberbegriffs des Anspruchs 6.

Die US-PS 5 873 498 offenbart einen Schüttgutbehälter, der auf einem Baufahrzeug in besonderer Weise aufgehängt und verwendet wird. Offenbart ist, das Gewebe über eine lasergeschweißte Doppelnaht zu verbinden.

Die PCT/W097/47796 offenbart ein Verfahren zum Laserstrahlschweißen von Kunststoffgeweben, wobei ein Energiekonvertierungsmittel in eines der zu verbindenden Gewebeteile, oder auch als separate Zwischenschicht zwischen zwei Gewebelagen, eingebracht wird. Vorteilhafte praktische Hinweise für die Fertigung von FIBC werden nicht offenbart.

Die DE 39 38 414 A1 zeigt einen Schüttgutbehälter, der in üblicher Weise aus mehreren Zuschnitten zu einem quaderförmigen Behälter zusammengesetzt ist, welcher sich im ausgefüllten Zustand durch den Innendruck des Schüttguts sich einer Zylinderform annähern kann. Es sind vier Seitenteile vorgesehen, die entlang der Seitenkanten miteinander vernäht sind. Die Seitenwände sind mit einem Bodenabschnitt vernäht, der außerdem noch mit angesetzten Ausschütthilfen wie Stutzen und dergleichen ergänzt sein kann. An der Oberseite des so gebildeten Behälters kann ein zusätzlicher Deckelabschnitt vorgesehen sein, der mit Einfüllhilfen versehen sein kann. Zusätzlich sind an den oberen Ecken des Behältnisses Tragschlaufen angenäht, um eine Nutzung mit Hebezeugen zu ermöglichen.

Die Herstellung eines Schüttgutbehälters durch Vernähen einzelner Zuschnitte birgt mehrere Nachteile in sich. So erfolgt allein schon durch den Nadeleinstich eine Schwächung des Materials, bei dem es sich üblicherweise um Kunststoffgewebe aus Bändchen aus Polypropylen-, Polyethylen oder HD-Polyethylen-Folie handelt, so dass im Bereich der Einstiche eine Perforationslinie entsteht, entlang der es bei starker Belastung des Schüttgutbehälters zu einer Aufweitung der Stichlöcher kommt. Aufgrund der Perforationen muss der Schüttgutbehälter mit einer Innenauskleidung oder einer Nahtabdeckung versehen werden, wenn sehr feinkörnige Schüttgüter transportiert werden sollen oder wenn der Schüttgutbehälter zur Aufnahme von Lebensmittel geeignet sein soll, damit eine hermetische Abschottung des Schüttguts von Umwelteinflüssen sichergestellt ist.

Um ein Aufweiten der Nähte zu verhindern, muss eine starke Flächenware verwendet werden, die im Hinblick auf die theoretisch auf das ungeschwächte Gewebe wirkenden Kräfte überdimensioniert ist. Teilweise müssen zusätzliche Verstärkungslagen in den Nahtbereich eingenäht werden.

Zudem erfordert die Herstellung gemäß dem Stand der Technik eine Vielzahl von Fertigungsschritten vom Zuschneiden und Vorkonfektionieren der Einzelteile, dem anschließenden Vernähen bis zu einer abschließenden Sichtkontrolle. Die Herstellung muss weitgehend manuell erfolgen.

Um die starken Kräfte auf die Seitennähte abzuschwächen, ist es bekannt, über die gesamte Höhe des Behälters Eckverstärkungen einzunähen, so dass verhindert wird, dass das Schüttgut direkt bis in die seitlichen Nahtbereiche fließt und so zu hohe Kräfte direkt auf die Seitennähte wirken. Solche Eckverstärkungen können jedoch gemäß dem Stand der Technik nur bis zu einer begrenzten Höhe des Behälters eingenäht werden, da bei einer zu überbrückenden Nahtlänge von mehr als einem Meter selbst mit Industrienähmaschinen eine Herstellung der Naht nicht mehr möglich ist.

In der US-PS 5845995 wird ein Verpackungssack angegeben, der durch Falten aus einem polyolefinischen Schlauchgewebe gebildet wird. Anschließend wird im Bereich der gefalteten Lagen eine angeschmolzene Zwischenschicht aus einem thermoplastischen Polymer eingelegt, an der die gefalteten Lagen anhaften, so dass eine dichte Verklebung des Bodenbereichs erfolgt. Das Einbringen der erwärmten Zwischenschicht ist allerdings schwierig. Nachteilig ist auch, dass durch den starken Wärmeeintrag, die einsickernde Schmelze aus der Zwischenschicht und die vollflächige Verklebung das Gewebe verklebt wird und das Gewebe damit seine Flexibilität verliert. Bei einem Gewebe aus verstreckten Kunststoffbändchen tritt durch die Wärmeeinwirkung der sogenannte memory effect ein, d.h. es erfolgt ein Abbau der Verstreckung, wodurch die Festigkeit des Gewebes sinkt.

Es stellt sich daher die Aufgabe, ein Herstellungsverfahren für einen flexiblen Schüttgutbehälter anzugeben, das eine wesentlich einfachere und kostengünstigere Herstellung gegenüber dem Stand der Technik ermöglicht.

Diese Aufgabe wird gemäß der Erfindung durch ein Verfahren zum Herstellen eines flexiblen Schüttgutbehälters mit den Merkmalen des Anspruchs 1 und einen flexiblen Schüttgutbehälter mit den Merkmalen des Anspruchs 6 gelöst.

Der Laserstrahl tritt durch das Polypropylen-Gewebe der äußeren Lage hindurch und trifft im Bereich einer Grenzfläche zwischen den aneinanderliegenden Gewebelagen auf das in die Grenzschicht eingebrachte Energiekonvertierungsmittel. Hier wird die eingestrahlte Lichtenergie in Wärmeenergie umgewandelt, die zu einer lokalen Erwärmung und partiellen Aufschmelzung des Gewebes führt. Die Aufschmelzung beider Fügepartner im Bereich der Grenzschicht führt zu einer Verschmelzung und damit zu einer stoffschlüssigen Verbindung. Es ist sogar möglich, den Laserstrahl durch mehrere Gewebelagen hindurch zu leiten und an einer innenliegenden, von außen nicht einsehbaren Grenzschicht eine Schweißnaht zu erzeugen, wozu an dieser Grenzschicht wenigstens im Nahtbereich ein Energiekonvertierungsmittel eingebracht wird. Das erfindungsgemäße Verfahren ist automatisierbar und daher kostengünstig durchführbar. Mit dem Laserdurchstrahlschweißen ist es somit möglich, Schweißnähte überall dort anzuordnen, wo sie funktionswesentlich sind. Es können auch Nähte durch Schweißen an Stellen hergestellt werden, die für eine Nähmaschine nicht zugänglich sind. Damit ist es möglich, einen Schüttgutbehälter neuartig zu konzipieren und die Anzahl der Einzelteile zu seiner Herstellung stark zu reduzieren.

Vorteilhaft ist auch, dass die Festigkeit der für die Herstellung von flexiblen Schüttgutbehältern meist verwendeten verstreckten Kunststoffbänder erhalten bleibt, da im Gegensatz zum Heizelementschweißen keine vollständige Erwärmung des Gewebes und damit keine Rückstellung der Verstreckung erfolgt.

Da im Bereich der Schweißnähte, im Gegensatz zum Vernähen mit einer Nähnadel, keine Schwächung des Gewebes mehr durch Perforationen erfolgt, kann ein Gewebe gewählt werden, das ein geringeres Flächengewicht aufweist, als dies bei vernähten Behältern erforderlich ist.

Vorteilhaft ist weiterhin, dass die Lage der Nähte einfach an die Kraftflüsse im Gewebe anpassbar ist und selbst komplizierte Formen des Zuschnitts ohne wesentliche Erhöhung der Fertigungskosten vorgesehen sein können. Weiterhin ist es möglich, feste und flexible Gewebe miteinander zu verbinden. Dies ist mit allen thermoplastischen Materialkombinationen möglich, bei denen eine Vermischung der Schmelze möglich ist. Wird beispielsweise ein Polypropylen-Bändchengewebe verwendet, so können Spritzgussteile aus Polypropylen ohne weiteres mit dem Gewebe verschweißt werden. Hierdurch können Rohrstutzen im Boden- bzw. Deckelbereich eingeschweißt werden, die ein Andocken an eine Befüll- oder Entladestation wesentlich erleichtern. Auch können Zusatzteile angeschweißt werden, die ein automatisiertes Greifen der Einfüll- und Auslassstutzen des Schüttgutbehälters ermöglichen, beispielsweise solche, die nach Art eines Bajonettverschlusses ausgebildet sind.

Das Einsetzen von Eckverstärkungen ist mit Hilfe des Laser-Durchstrahlschweißens ebenfalls problemlos möglich, da lediglich der Laserkopf entlang der Innenwandung des Behälters geführt werden muss, um die Eckverstärkung an der Seitenwand zu befestigen. Eine Beschränkung der Nahtlänge, wie bei Nähmaschinen gegeben, existiert hier nicht.

Es kann vorgesehen sein, das Gewebe vollflächig mit einem Energiekonvertierungsmittel, das die Lichtenergie eines Lasers bei bestimmter Wellenlänge absorbiert, zu beschichten oder den Kunststoff vor der Gewebeherstellung insgesamt mit einem Energiekonvertierungsmittel zu vermischen.

Bevorzugt wird der vorbereitete Gewebezuschnitt nur im Bereich der späteren Schweißnähte mit einem Energiekonvertierungsmittel, beispielsweise durch Aufdrucken, versehen.

Das Energiekonvertierungsmittel kann weiterhin in Form einer Schweißfolie bereitgestellt werden, die in die Grenzschicht im Bereich der gewünschten Nahtverläufe eingelegt wird. Die Schweißfolie besteht aus einem Trägerkunststoff, der mit Lichtenergie absorbierenden Pigmenten gemischt ist. Die Dikke der Schweißfolie, deren Erweichungstemperatur oder der Absorptionsgrad der Pigmente können so gewählt sein, dass entweder die Schweißfolie vollständig im Bereich der Schweißnaht aufschmilzt und ein Schmelzebad aus Kunststoff erzeugt wird, das seinerseits eine lokale Aufschmelzung der Oberflächen des zu verschweißenden Gewebes bewirkt oder so, dass die Schweißfolie lediglich stark erwärmt wird und die beiden Gewebelagen durch die zwischengelegte Schweißfolie aneinander haften bzw. intensiv verbunden werden.

Vorgeschlagen wird auch, eine Mikroperforation durch punktuell aufgebrachte Laserenergie vorzunehmen. Mit einem stark fokussiertem Laserstrahl können, insbesondere in mechanisch wenig belasteten Bereichen, problemlos Mikroperforationen eingebracht werden, die zu einer kontrollierten Entlüftung des Innenraums des Behälters beitragen, ohne dass jedoch ein Ausfließen von Schüttgut aus dem Inneren erfolgt.

Im Bereich der Tragschlaufen kann auf die bisher erforderliche Anbringung von Verstärkungsbereichen verzichtet werden. Vorgeschlagen wird hier, bei besonders belasteten Behältern den an den Behälter angeschweißten Laschenbereich aufzufächern und die einzelnen Finger des Fächers anzuschweißen, um eine günstigere Kraftverteilung zu erreichen. Die größere Anzahl und Länge der Schweißnähte bedeutet bei dem automatisierbaren Verfahren der Erfindung keinen Nachteil mehr.

Die Anbringung üblicher Anschweißlaschen mit nahezu rechtekkigem Zuschnitt ist ebenfalls möglich.

Die Erfindung wird nachfolgend anhand von Ausführungsbeispielen und mit Bezug auf die Zeichnung näher erläutert. Es zeigen im einzelnen:
- Fig. 1a, 1b: das Verschweißen eines Gewebezuschnitts zu einem Zylinder in schematische Ansicht;
- Fig. 2a, 2b: das Verschweißen zweier bzw. dreier Gewebelagen mittels Laserdurchstrahlschweißen in schematischer Schnittansicht;
- Fig. 3a bis 3c: die Konfektionierung eines Gewebeschlauchabschnittes durch Falzen und Umlegen in verschiedenen Verfahrensstadien;
- Fig. 4: einen Schüttgutbehälter mit besonderer Tragschlaufenausbildung in perspektivischer Ansicht;
- Fig. 5a, 5b: einen weiteren vorkonfektionierten Gewebeabschlauchabschnitt für die Herstellung eines Schüttgutbehälters durch Falzen und Umlegen;
- Fig. 6: einen weiteren vorkonfektionierten Gewebeabschnitt für die Herstellung eines Schüttgutbehälters durch randseitiges Verschweißen;
- Fig. 7: das Verschweißen eines Überlappungsbereichs in schematischer Schnittdarstellung; und
- Fig. 8: eine weitere Ausführungsform eines Schüttgutbehälters in perspektivischer Ansicht.

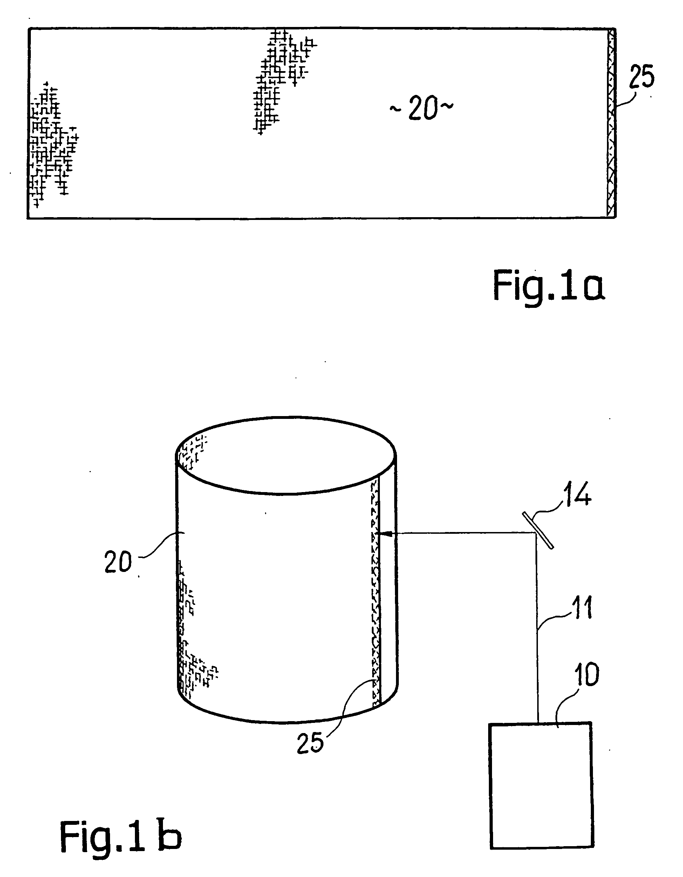

Fig. 1a zeigt einen Gewebezuschnitt 20, bei dem im Nahtbereich 25 ein Energiekonvertierungsmittel aufgedruckt oder in anderer Weise aufgebracht ist. Das Energiekonvertierungsmittel kann aus Kohlenstoff bestehen, insbesondere in Form von Russ. Da Kohlenstoff Licht aller Wellenlängen absorbiert, sind verschiedene Laser einsetzbar, insbesondere kostengünstige Halbleiterlaser.

In Fig. 1b ist der Gewebezuschnitt 20 unter Ausbildung einer Überlappung im Nahtbereich 25 zu einem Zylinder gerollt. Der von einem Laser 10 ausgelenkte Laserstrahl 11 wird an einer optischen Einrichtung 14 umgelenkt und entlang des Nahtbereichs 25 geführt.

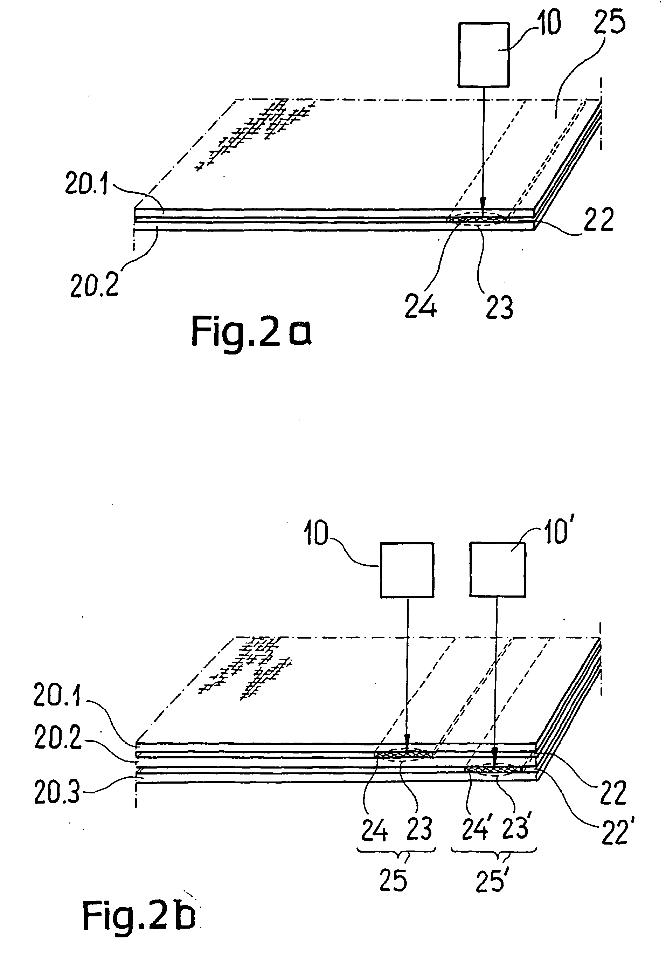

Das Verschweißen des Gewebezuschnitts mittels Laserdurchstrahlschweißen wird mit Bezug auf Figur 2 erläutert. Dort sind zwei aneinanderliegende Gewebelagen 20.1, 20.2 dargestellt, in deren Grenzschicht 22 partiell ein Energiekonvertierungsmittel 24 eingebracht ist. Die zeichnerisch dargestellten Größenverhältnisse der Figur 2 sind nicht maßstäblich und dienen nur zur Verdeutlichung. Üblicherweise wird das Energiekonvertierungsmittel 24 in einer Schichtdicke von ca. 10...100 µm aufgebracht, so dass die Grenzschicht 22 ebenfalls diese Dicke hat. Die Dicke der oben liegenden, zu durchstrahlenden Gewebelage 20.1 ist bei entsprechender Lichtdurchlässigkeit für den Laserstrahl 11 nahezu beliebig, solange die Lichtdämpfung in der Gewebelage 20.1 nicht so stark ist, dass eine Aufschmelzung der Grenzschicht 22 nicht mehr erreichbar ist. Die Dicke des nicht durchstrahlten, unteren Kunststoffteils 20.2 ist in jedem Fall beliebig.

Der Laserstrahl durchläuft das Kunststoffteil 20.1, trifft in der Grenzschicht 22 auf das dort eingebrachte Energiekonvertierungsmittel 24, wobei die Lichtenergie in Wärmeenergie umgewandelt wird. Nach den Gesetzmäßigkeiten der Thermodynamik und unter Berücksichtigung von Umwelteinflüssen, z. B. durch Abkühlung, kann die Wärmemenge pro Zeit berechnet werden, die in die Grenzschicht 22 eingebracht werden muss, um ein Anschmelzen der Gewebelagen 20.1, 20.2 zu erreichen, ohne jedoch ein vollständiges Aufschmelzen, Erweichen oder gar Zerstören der Gewebelagen 20.1, 20.2 zu bewirken.

Bei allen Schweißvorgängen bildet sich eine im Schnitt linsenförmige Schweißnahtstelle 23, die zunächst schmelzeförmig vorliegt und nach dem Ende der Bestrahlung mit Laserlicht abkühlt und erstarrt. Die Symmetrieebene der Schweißnahtstelle 23 liegt etwa in der Grenzschicht 22, wodurch ein gleichmäßiger Kraftverlauf und eine hohe Belastbarkeit des Nahtbereichs 25 erreicht wird.

Außerdem ergibt sich bei dem Verfahren folgende in Figur 2b schematisch dargestellte Möglichkeit:

Es kann ein weiterer Laser 10' mit einer Wellenlänge λ₂ vorgesehen werden. In die Grenzschicht 22 oder - bei mehr als zwei Gewebelagen 20.1, 20.2, 20.3 - in eine weitere Grenzschicht 22' wird außer in den bereits bestehenden Nahtbereich 25 ein weiteres Energiekonvertierungsmittel 24' eingebracht, das Licht mit der Wellenlänge λ₂ absorbiert, aber nicht das Licht mit der Wellenlänge λ₁ in einem Maße, dass eine Aufschmelzung bewirkt wird. Es wird so ein weiterer Nahtbereich 25' ausgebildet. Damit ist es möglich, zwei Nähte oder mehr gleichzeitig nebeneinander oder übereinander durch Laserstrahlschweißen herzustellen.

Weiterhin ist es möglich, ein Energiekonvertierungsmittel zu verwenden, das bei den Wellenlängen λ₁ und λ₂ nur jeweils einen Teil des Lichtes absorbiert. Bei Bestrahlung mit nur einem der Laserstrahlen 10 oder 10' erfolgt nur eine lokale Erwärmung, aber noch keine Aufschmelzung und Verschweißung. Erst wenn mehrere Laserstrahlen 11, 11' mit den Wellenlänge λ₁ und λ₂ gleichzeitig eingesetzt werden, ist der Energieeintrag ausreichend, um eine Schweißnahtstelle 23, 23' herzustellen. Somit ist es beispielsweise möglich, bei dem Gewebe nur die Kreuzungspunkte zu verschweißen, wenn die Schussfäden mit dem ersten Energiekonvertierungsmittel 24 und die Kettfäden mit dem zweiten Energiekonvertierungsmittel 24' beschichtet sind. Im Überlappungsbereich am Knotenpunkt liegen beide Energiekonvertierungsmittel 24, 24' aneinander vor, so dass ein Laserstrahl mit der Wellenlänge λ₂ nur dort eine Verschweißung bewirken kann, während er ansonsten vollflächig über das Gewebe streichen kann, ohne dieses aufzuschmelzen. Durch die bloße Verbindung der Knotenpunkte bleibt das Gewebe flexibel.

Ein flexibles Gewebe wird auch dann erhalten, wenn ein einzelner Laser mit einem Bildverarbeitungssystem und einer Steuerungseinrichtung gekoppelt ist, durch welche ein Einschalten des Laserstrahls nur an den Kreuzungspunkten der Kett- und Schussfäden erfolgt. In diesem Fall reicht es aus, auf den Kett- oder auf den Schussfaden ein Energiekonvertierungsmittel aufzubringen.

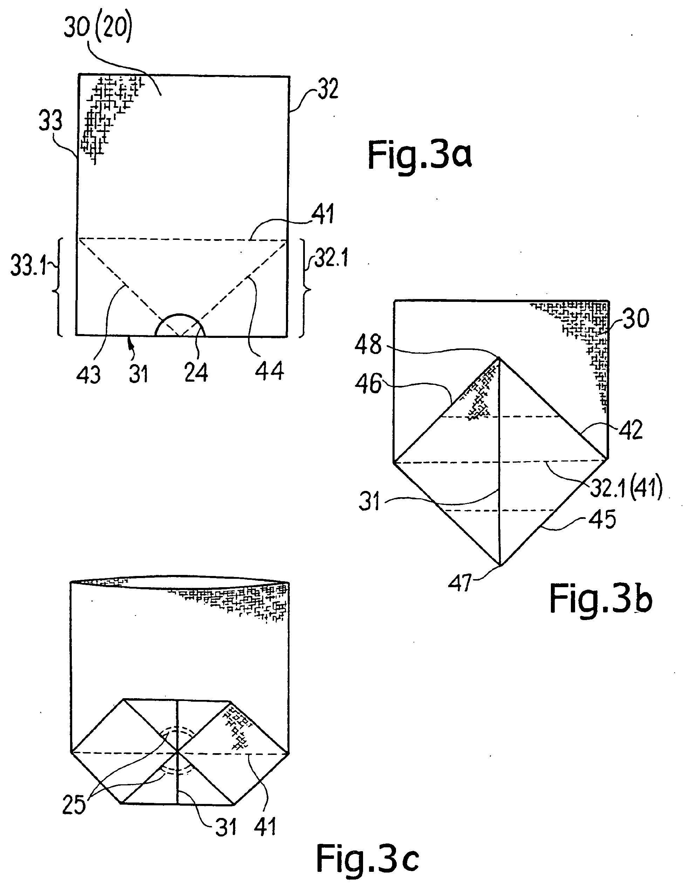

In den Fig. 3a bis 3c ist die Vorbereitung eines Gewebeschlauchabschnitts zur Herstellung eines Schüttgutbehälters dargestellt. Es wird entweder ein Gewebeschlauch gewählt oder, wie oben unter Bezug auf Fig. 1a, b dargestellt, ein ebener Gewebezuschnitt 20 zu einem Schlauch verbunden.

Bevorzugt wird ein Polypropylen-Bändchengewebe gewählt, wobei die Bändchen vorzugsweise eine Breite von 1 bis 4 mm aufweisen und vorzugsweise in einem Verhältnis von 1 : 7 bis 1 : 6 verstreckt sind. Insbesondere durch die monoaxiale Verstreckung werden Zugfestigkeiten des Gewebes um ca. 250 N/mm² erreicht. Die Bändchen des Polypropylens setzen sich beispielsweise wie folgt zusammen:
- 95 % PP
- 1,5 % UV-Stabilisator
- 3,5 % Antisplitt, z.B. Calciumcarbonat, Titandioxid, Talkum etc.

Daneben sind insbesondere Gewebe aus PE, HDPE und PET verarbeitbar.

In Bereich einer Unterkante 31 ist der Gewebezuschnitt 20 mit einem Aufdruck eines Energiekonvertierungsmittels 24 versehen, welcher dem späteren Nahtverlauf entspricht.

Wie in Fig. 3a dargestellt, ist der Schlauchabschnitt zu einer Flachbahn 30 flachgelegt. Anschließend werden mehrfach Falzmarkierungen 41, 43, 44 angebracht und Ecken umgelegt, bis ein gefalteter Boden- oder Deckelabschnitt des Schüttgutbehälters entsteht.

Vorzugsweise erfolgt das Falten eines Boden- und/oder Dekkelbereichs durch folgende weitere Verfahrensschritte (vgl. Fig. 3a):

Zunächst wird eine erste Falzmarkierung 41 an beiden Gewebelagen 20.1, 20.2 über die gesamte Breite der Flachbahn 30 hergestellt und zwar in einem Abstand zu der Unterkante 31 entsprechend der halben Breite der Flachbahn 30.

Eine zweite und dritte Falzmarkierung 43, 44 werden ausgehend von der Mitte der Unterkante 31 bis zum jeweiligen Schnittpunkt der ersten Falzmarkierung 41 mit einer Seitenkante 32, 33 der Flachbahn 30 hergestellt.

Ein erster und ein zweiter Seitenkantenabschnitt 32.1, 33.1, der sich jeweils zwischen der Unterkante 31 und der ersten Falzmarkierung 41 erstreckt, werden ins Innere der doppellagigen Flachbahn 30 geschoben. Dabei wird das Gewebe entlang der zweiten und dritten Falzmarkierung 43, 44 umgeknickt. In der Endstellung dieses Herstellungsschrittes liegen die Seitenkantenabschnitte 32.1, 33.1 im Inneren der doppellagigen Flachbahn 30 an der ersten Falzmarkierung 41 an.

Es entsteht eine Konfiguration, die in Figur 3b dargestellt ist und deutlich sichtbare Dreiecksbereiche 45, 46 aufweist. Diese werden etwa hälftig umgeknickt, so dass ihre Ecken 46, 47 im Bereich der ersten Falzmarkierung 41 anliegen und der in Fig. 3c dargestellte Ausgangszustand erreicht wird.

Auf die freiliegenden Ecken 46, 47 des so gebildeten Schüttgutbehälters wirken nur noch sehr geringe Zugkräfte, so dass jeweils eine sehr kurze Schweißnaht, mit der die Ecken 46, 47 durch Laserstrahlschweißen an das Gewebe 20 angeschlossen sind, ausreichend ist. Beispielsweise können die Ecken über einen bogenförmigen Schweißnahtbereich 25 angebunden werden.

Die dargelegte, sehr einfache Herstellung eines Schüttgutbehälters 100 durch Falzen und Umlegen basiert ganz wesentlich auf dem hier eingesetzten Laserschweißverfahren, denn mit herkömmlichen Nähtechniken wäre es nicht möglich, im Innenbereich des Boden- bzw. Deckelabschnitts Nahtabschnitte 25 maschinell zu vernähen.

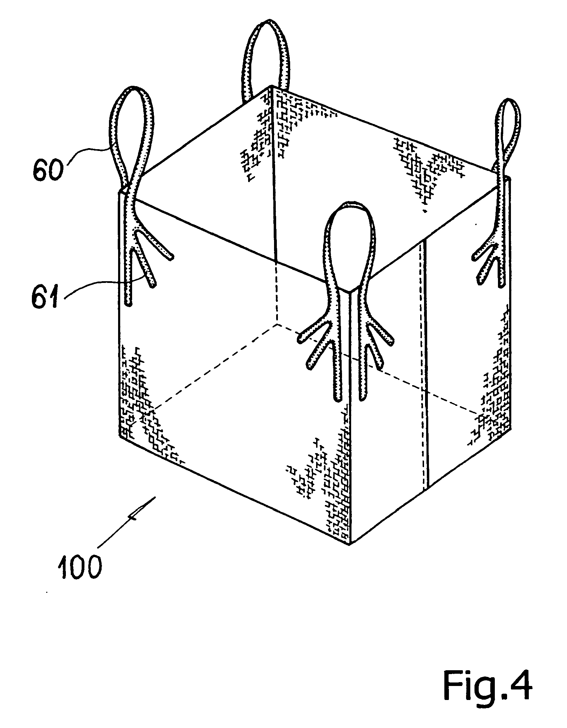

Fig. 4 zeigt einen fertigen Schüttgutbehälter 100, der mit Tragschlaufen 60 versehen ist. Die Anschweißlaschen 61 der Tragschlaufen 60 sind jeweils aufgefächert; die einzelnen Fächer sind so an die Seitenwände angeschweißt, dass sie etwa entlang des erwarteten Kraftverlaufs angeordnet sind. Das Laserstrahlschweißen mit einem aufgedrucktem Energiekonvertierungsmittel ermöglicht, eine Vielzahl komplexer Nahtverläufe vorzusehen, so auch bei den aufgefächerten Anschweißlaschen. Eine Erhöhung der Herstellungskosten erfolgt nicht, da das Aufdrucken des Energiekonvertierungsmittels für alle Nahtbereiche in einem Arbeitsgang erfolgen kann und das Verschweißen mittels Laserstrahls durch eine elektronische Bahnsteuerung automatisierbar ist.

Ein Anschweißen üblicher Tragschlaufen mit etwa rechteckigen Anschweißlaschen ist ebenfalls möglich. Solche Anschweißlaschen sind ausreichend bei üblicher Belastung. Auch hier ist durch die Erfindung eine schnelle Fertigung der Nähte zu erzielen.

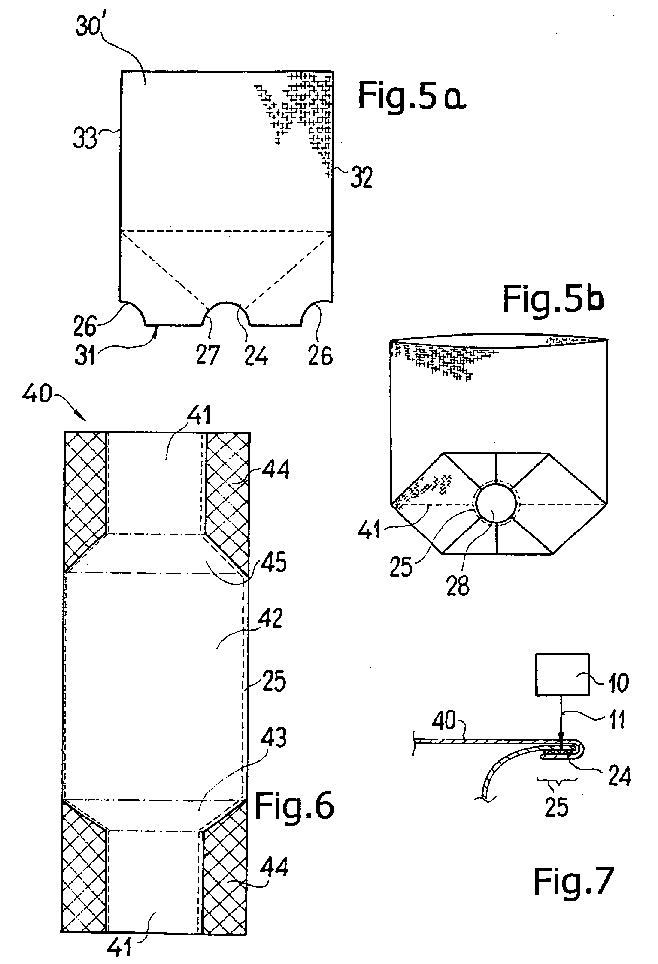

In Fig. 5a ist eine weitere Flachbahn 30 dargestellt, die an den Ecken der Unterkante 31 vierteilkreisförmige Ausnehmungen 26 aufweist. Außerdem ist eine weitere, durch den Aufdruck des Energiekonvertierungsmittels 24 eingefasste halbkreisförmige Ausnehmung 27 vorhanden. Unter Anwendung der zuvor mit Bezug auf die Fig. 3a bis 3c erläuterten Verfahrensschritte wird dann ein Schüttgutbehälter erhalten, bei dem sich am Boden- bzw. Deckelabschnitt die viertel- und halbkreisförmigen Ausnehmungen 26; 27 zu einer in Fig. 5b dargestellten kreisförmigen Ausnehmung 28 ergänzen, an der noch Einfüll- bzw. Auslasshilfen angebracht werden können.

Ebenfalls erst durch die Anwendung des Laserstrahlschweißens mit beispielsweise aufgedruckten Energiekonvertierungsmitteln ermöglicht ist die weitere Herstellungsweise eines Schüttgutbehälters, die mit Bezug auf die Figuren 6 bis 8 erläutert wird:

Wenigstens ein Gewebezuschnitt 40 (vgl. Fig. 6) wird durch eckseitiges Ausnehmen zweier asymmetrischer, sich spiegelbildlich an einer Kante gegenüberliegender Trapezabschnitte 44 gebildet. Der so erhaltene Gewebezuschnitt 40 weist wenigstens auf:
- einen rechteckigen Seitenwandbereich 42;
- einen sich an den Seitenwandbereich 42 anschließenden trapezförmigen Boden- oder Deckelbereich 43; 45 und
- einen sich an jeweils an den Boden- und/oder an den Dekkelbereich 43; 45 anschließenden rechteckigen Stutzenbereich 41.

Es kann entweder ein Gewebeschlauch entsprechend bearbeitet werden oder aber es werden vier gleichartige Gewebezuschnitte 40 kombiniert. Wird ein Gewebeschlauch mit Ausnehmungen 44 versehen, bleibt im Seitenwandbereich ein endloser Schlauchkörper erhalten. In beiden Fällen wird in der bevorzugten Ausführungsform gemäß Fig. 7 ein Gewebezuschnitt 40 im Nahtbereich 25 umgelegt. Verschweißt wird das umgelegte kurze Ende, da so die Schälwirkung auf die Schweißnähte minimiert ist. Mit dem erfindungsgemäßen Verfahren kann die Schweißnaht an dem verdeckt liegenden umgelegten Nahtbereich durch Einstrahlen eines Lasers 10 von der leicht zugänglichen Außenseite her erfolgen. Der Laserstrahl 11 tritt durch die äußeren Gewebelagen hindurch, bis er auf das Energiekonvertierungsmittel 24 trifft und dort eine Verschmelzung der überlappenden Gewebezuschnitte 40 bewirkt.

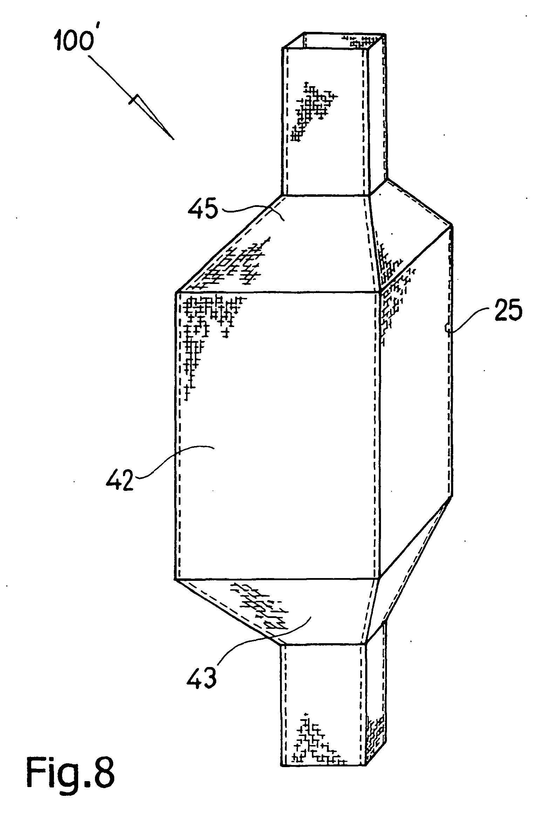

Fig. 8 zeigt einen aus vier Gewebezuschnitten 40 hergestellten Schüttgutbehälter 100'. Die Seitenwandbereiche 42 sind in randseitigen Nahtbereichen 25, die in der Figur jeweils durch eine gestrichelte Linie angedeutet sind, miteinander verbunden, so dass sich im Seitenwandbereich 42 ein etwa quaderförmiger, aber flexibler Behälter ergibt, der nach unten durch die miteinander verbundenen trapezförmigen Bodenbereiche 43 und nach oben durch die miteinander verbundenen trapezförmigen Deckelbereiche 45 begrenzt ist. In der jeweiligen Mitte des Bodens bzw. Deckels schließt sich ein Einfüll- bzw. Auslassstutzen an. Dieser Schüttgutbehälter 100' wird durch maschinelles Abfahren mit dem Laser von nur vier Nahtlinien 25 fertiggestellt.

## Patentansprüche

1. Verfahren zum Herstellen eines flexiblen Schüttgutcontainers (100') aus einem Kunststoff Bändchengewebe durch Laserstrahlschweißen,
**gekennzeichnet durch** folgende Verfahrensschritte:
a) Einbringen eines die Lichtenergie eines Laserstrahls (11; 11') mit der Wellenlänge λ₁, absorbierenden und in Wärmeenergie umwandelnden Energiekonvertierungsmittels (24; 24') in einen Nahtbereich (25) wenigstens eines Gewebezuschnitts (20; 40), wobei der Gewebezuschnitt aus einem Kunststoff besteht, der durchlässig für den Laserstrahl ist;
b) Herstellen einer Überlappung des Gewebezuschnitts (20; 40) im Nahtbereich (25) unter Ausbildung einer Grenzschicht (22) zwischen den überlappenden Gewebelagen (20.1, 20.2);
c) Durchstrahlen wenigstens einer der Gewebelagen (20.1, 20.2) mit einem Laserstrahl (11; 11') mit einer Wellenlänge λ₁, im Nahtbereich (25);
d) partielles Aufschmelzenlassen der Gewebelagen (20.1, 20.2) im Oberflächenbereich an der Grenzschicht (22) und Abkühlenlassen unter Ausbildung einer Schweißnahtstelle (23) als innige Verbindung zwischen den Gewebelagen (20.1, 20.2); und
e) Wiederholung der Schritte b) bis d) bis zur Verschweißung aller Nahtbereiche (25);
wobei wenigstens ein Gewebezuschnitt (40) **durch** eckseitiges Ausnehmen zweier asymmetrischer, sich spiegelbildlich an einer Kante gegenüberliegender Trapezabschnitte (44) gebildet wird, wobei der so erhaltene Gewebezuschnitt (40) wenigstens aufweist:
- einen rechteckigen Seitenwandbereich (42);
- einen sich an den Seitenwandbereich (42) anschließenden trapezförmigen Boden- oder Deckelbereich (43; 45) und
- einen sich an jeweils an den Boden- und/oder an den Deckelbereich (43; 45) anschließenden rechteckigen Stutzenbereich (41),
welche Seitenwand-, Boden-, Deckel- und/oder Stutzenbereiche (41; 42; 43; 44;45) jeweils in randseitigen Nahtbereichen (25) verschweißt werden.

2. Verfahren nach Anspruch 1, **dadurch gekennzeichnet, dass** das Energiekonvertierungsmittel (24; 24') auf wenigstens eine der Gewebelagen (20.1, 20.2) aufgedruckt wird.

3. Verfahren nach Anspruch 2, **dadurch gekennzeichnet, dass** das Energiekonvertierungsmittel (24; 241) im Nahtbereich aufgedruckt wird.

4. Verfahren nach Anspruch 2, **dadurch gekennzeichnet, dass** das Energiekonvertierungsmittel (24; 24') vollflächig aufgedruckt wird.

5. Verfahren nach einem der Ansprüche 1 bis 4, **dadurch gekennzeichnet, dass** das Energiekonvertierungsmittel (24;24') in Form einer Lichtenergie absorbierenden Schweißfolie zwischen die Gewebelagen (20.1, 20.2) gelegt wird.

6. Flexibler Schüttgutbehälter (100), der aus wenigstens einem Gewebezuschnitt (20) aus einem Kunststoff-Bändchengewebe gebildet ist, wobei in den Nahtbereichen (25) der Gewebezuschnitt überlappend ist oder mit einem weiteren aufgelegten Gewebezuschnitt versehen ist, und der wenigstens eine umlaufende Seitenwand und wenigstens einen Bodenabschnitt oder einen Deckelabschnitt aufweist,
**dadurch gekennzeichnet,**
- **dass** in die zwischen der Überlappung und/oder den aufeinanderliegenden Gewebezuschnitten befindliche Grenzschicht (22) ein Energiekonvertierungsmittel (24, 24') eingebracht ist und der bzw. die Gewebezuschnitte durch auf das Energiekonvertierungsmittel (24, 24') einwirkende Laserstrahlen (11, 111) verschmolzen ist bzw. sind,
- **dass** die Seitenwand und der Bodenabschnitt oder der Deckelabschnitt durch vier Gewebezuschnitte (40) gebildet sind, die in randseitigen Nahtbereichen (25) verschweißt sind, wobei jeder Gewebezuschnitt (40) wenigstens aufweist:
- einen rechteckigen Seitenwandbereich (42);
- einen sich an den Seitenwandbereich (42) anschließenden trapezförmigen Boden oder Deckelbereich (43; 45); und
- einen sich an jeweils an den Boden- und/oder an den Deckelbereich (43; 45) anschließenden rechteckigen Stutzenbereich (41).

7. Schüttgutbehälter (100') nach Anspruch 6, **dadurch gekennzeichnet, dass** an der Seitenwand wenigstens eine Tragschlaufe (60) angeordnet ist, die über eine fingerförmig aufgefächerte Anschweißlasche (61) mit der Seitenwand verbunden ist.

8. Schüttgutbehälter (100') nach Anspruch 6 oder 7, **dadurch gekennzeichnet, dass** der Gewebezuschnitt (20; 40) wenigstens teilweise mit Mikroperforationen versehen ist, die durch punktuelle Einstrahlung von Laserstrahlen (11, 111) eingeschmolzen sind.

## Claims

1. A method of producing a flexible bulk goods container (100') from a plastics material ribbon fabric by laser beam welding,
**characterised by** the following method steps:
a) introduction of an energy conversion means (24; 24'), which absorbs the light energy of a laser beam (11; 11') with the wavelength λ₁ and which converts it into thermal energy, into a seam area (25) of at least one fabric blank (20; 40), wherein the fabric blank consists of a plastics material which is permeable to the laser beam;
b) production of an overlap of the fabric blank (20; 40) in the seam area (25) whilst forming a boundary layer (22) between the overlapping fabric layers (20.1, 20.2);
c) irradiation of at least one of the fabric layers (20.1, 20.2) with a laser beam (11; 11') with a wavelength λ₁, in the seam area (25);
d) partial melting of the fabric layers (20.1, 20.2) in the surface area on the boundary layer (22) and allowing to cool whilst forming a welding seam point (23) as an intimate join between the fabric layers (20.1, 20.2); and
e) repetition of steps b) to d) until all the seam areas (25) have been welded;
wherein at least one fabric blank (40) is formed by the removal at the corners of two asymmetrical trapezoidal portions (44) which are opposite each other at one edge in a mirror-image manner, wherein the fabric blank (40) obtained in this way has at least:
- one rectangular lateral wall area (42);
- one trapezoidal base or cover area (43; 45) adjoining the lateral wall area (42) and
- one rectangular support area (41) adjoining the base area and/or the cover area (43; 45) in each case,
which lateral-wall, base, cover and/or support areas (41; 42; 43; 44; 45) are welded in seam areas (25) at the edges in each case.

2. A method according to claim 1, **characterised in that** the energy conversion means (24; 24') is pressed onto at least one of the fabric layers (20.1, 20.2).

3. A method according to claim 2, **characterised in that** the energy conversion means (24; 241) is pressed on in the seam area.

4. A method according to claim 2, **characterised in that** the energy conversion means (24; 24') is pressed on over the entire area.

5. A method according to any one of claims 1 to 4, **characterised in that** the energy conversion means (24; 24') is laid in the form of a welding film absorbing light energy between the fabric layers (20.1, 20.2).

6. A flexible bulk goods container (100) which is formed from at least one fabric blank (20) of a plastics material ribbon fabric, wherein the fabric blank is overlapping in the seam areas (25) or is provided with a further fabric blank laid thereon, and which has at least one continuous lateral wall and at least one base portion or one cover portion,
**characterised in that**
- an energy conversion means (24; 24') is introduced into the boundary layer (22) situated between the overlap and/ or the fabric blanks lying one upon the other and the fabric blank or blanks is or are melted by laser beams (11, 111) which act upon the energy conversion means (24; 24'),
- the lateral wall and the base portion or the cover portion are formed by four fabric blanks (40) which are welded in welding seams (25) at the edges, wherein each fabric blank (40) has at least:
-- one rectangular lateral wall area (42);
-- one trapezoidal base or cover area (43; 45) adjoining the lateral wall area (42); and
-- one rectangular support area (41) adjoining the base area and/or the cover area (43; 45) in each case.

7. A bulk goods container (100') according to claim 6, **characterised in that** at least one carrying strap (60), which is connected to the lateral wall by way of a welding attachment (61) spread out in the form of fingers, is arranged on the lateral wall.

8. A bulk goods container (100') according to claim 6 or 7, **characterised in that** the fabric blank (20; 40) is provided at least in part with microperforations which are melted by point-wise radiation of laser beams (11, 111).

## Revendications

1. Procédé de fabrication d'un conteneur pour marchandises en vrac (100') flexible en tissu de bandelettes synthétique par soudage au laser, **caractérisé par** les étapes de procédé suivantes :
a) introduire un moyen de conversion d'énergie (24 ; 24') absorbant l'énergie lumineuse d'un rayon laser (11 ; 11') doté de la longueur d'onde λ₁ et la convertissant en énergie thermique dans une zone de soudure (25) au moins d'une découpe de tissu (20 ; 40), sachant que la découpe de tissu se compose d'un matériau synthétique perméable au rayon laser ;
b) établir un chevauchement de la découpe de tissu (20 ; 40) dans la zone de soudure (25) en réalisant une couche limite (22) entre les couches de tissu se chevauchant (20.1, 20.2) ;
c) irradier au moins l'une des couches de tissu (20.1, 20.2) avec un rayon laser (11 ; 11') doté d'une longueur d'onde λ₁ dans la zone de soudure (25) ;
d) faire fondre partiellement les couches de tissu (20.1, 20.2) dans la zone de surface sur la couche limite (22) et faire refroidir en réalisant un point de cordon de soudure (23) comme liaison intime entre les couches de tissu (20.1, 20.2) ; et
e) répéter les étapes b) à d) jusqu'au soudage de toutes les zones de soudure (25) ;
sachant qu'au moins une découpe de tissu (40) est formée par évidement côté angle de deux sections trapézoïdales (44) asymétriques, s'opposant de manière inversée sur une arête, sachant que la découpe de tissu ainsi obtenue (40) présente au moins :
- une zone de paroi latérale (42) rectangulaire ;
- une zone de fond ou de couvercle (43 ; 45) trapézoïdale contigüe à la zone de paroi latérale (42) et
- une zone de tubulure (41) rectangulaire contiguë respectivement à la zone de fond et/ou de couvercle (43 ; 45),
lesquelles zones de paroi latérale, de fond, de couvercle et/ou de tubulure (41 ; 42 ; 43 ; 44 ; 45) sont soudées respectivement en zones de soudure (25) côté bord.

2. Procédé selon la revendication 1, **caractérisé en ce que** le moyen de conversion d'énergie (24 ; 24') est appliqué sur au moins l'une des couches de tissu (20.1, 20.2).

3. Procédé selon la revendication 2, **caractérisé en ce que** le moyen de conversion d'énergie (24 ; 241) est appliqué dans la zone de soudure.

4. Procédé selon la revendication 2, **caractérisé en ce que** le moyen de conversion d'énergie (24 ; 24') est appliqué sur toute la surface.

5. Procédé selon l'une quelconque des revendications 1 à 4, **caractérisé en ce que** le moyen de conversion d'énergie (24 ; 24') est placé sous la forme d'une feuille de soudage absorbant de l'énergie lumineuse entre les couches de tissu (20.1, 20.2).

6. Conteneur pour marchandises en vrac (100) flexible qui est formé d'au moins une découpe (20) de tissu de bandelettes synthétique, sachant que la découpe de tissu est chevauchante dans les zones de soudure (25) ou est pourvue d'une autre découpe de tissu placée et présente au moins une paroi latérale rotative et au moins une section de fond ou une section de couvercle,
**caractérisé en ce que**
- un moyen de conversion d'énergie (24, 24') est introduit dans la couche limite (22) se trouvant entre le chevauchement et/ou les découpes de tissu reposant l'une sur l'autre et la ou les découpes de tissu est ou sont fondues par des rayons laser (11, 111) agissant sur le moyen de conversion d'énergie (24, 24'),
- la paroi latérale et la section de fond ou la section de couvercle sont formées par quatre découpes de tissu (40) qui sont soudées dans des zones de soudure côté bord (25), sachant que chaque découpe de tissu (40) présente au moins :
-- une zone de paroi latérale rectangulaire (42) ;
-- une zone de fond ou de couvercle (43 ; 45) trapézoïdale contigüe à la zone de paroi latérale (42) ; et
-- une zone de tubulure (41) rectangulaire contiguë respectivement à la zone de fond et/ou de couvercle (43 ; 45).

7. Conteneur pour marchandises en vrac (100') selon la revendication 6, **caractérisé en ce qu'**au moins une dragonne (60) est disposée sur la paroi latérale, laquelle est reliée à la paroi latérale par une languette de soudage (61) déployée en forme de doigt.

8. Conteneur pour marchandises en vrac (100') selon la revendication 6 ou 7, la découpe de tissu (20 ; 40) est pourvue au moins en partie de microperforations fondues par irradiation ponctuelle de rayons laser (11, 111).
